(19) Europäisches Patentamt
European Patent Office
Office européen des brevets

(11) Veröffentlichungsnummer: **0 437 843 A1**

# (12) EUROPÄISCHE PATENTANMELDUNG

(21) Anmeldenummer: **90125636.2**

(22) Anmeldetag: **28.12.90**

(51) Int. Cl.5: **C07F 9/38**, C08F 230/02, C08F 246/00, C08F 220/10, C11D 3/34, C11D 3/36, E21B 41/02

(30) Priorität: **19.01.90 DE 4001420**

(43) Veröffentlichungstag der Anmeldung: **24.07.91 Patentblatt 91/30**

(84) Benannte Vertragsstaaten: **AT BE CH DE ES FR GB IT LI NL**

(71) Anmelder: **HOECHST AKTIENGESELLSCHAFT**
**Postfach 80 03 20**
**W-6230 Frankfurt am Main 80(DE)**

(72) Erfinder: **Porz, Christoph, Dr.**
**Haager Weg 100**
**W-5300 Bonn(DE)**
Erfinder: **Reinhardt, Gerd, Dr.**
**Freiherr-vom-Stein-Strasse 37**
**W-6233 Kelkheim/Taunus(DE)**
Erfinder: **Hoffmann, Hermann, Dr.**
**In den Padenwiesen 13**
**W-6233 Kelkheim/Taunus(DE)**

## (54) Alkenylaminomethylenphosphonsäuren und deren Copolymere mit ungesättigten Carbonsäuren.

(57) Alkenylaminomethylenphosphonsäuren der Formel

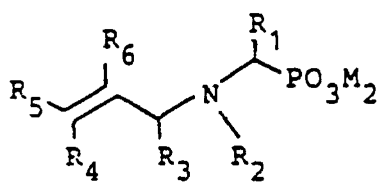

(I)

worin

$R_1$

Wasserstoff, $C_4$-$C_{10}$-Alkyl, Phenyl, Naphthyl, Methylphenyl, Hydroxyphenyl, Methoxyphenyl, Methylnaphthyl, Hydroxynaphthyl oder Methoxynaphthyl,

$R_2$

Wasserstoff,

$R_3$, $R_4$, $R_6$

Wasserstoff oder Methyl,

$R_5$

Wasserstoff, $C_1$-$C_4$-Alkyl oder Phenyl, und

M

Wasserstoff oder ein Kation bedeuten, sowie

Copolymere bestehend aus 0,1 - 99,9 Gew.-%, bevorzugt 1 - 50 Gew.-%, von einem oder mehreren Monomeren der Formel I, wobei $R_2$ Wasserstoff oder eine Gruppe der Formel $-CH_2PO_3M_2$ bedeutet und 99,9 - 0,1 Gew.-%, bevorzugt 99 - 50 Gew.-% von einem oder mehreren Monomeren der Formel II

$R_1'R_2'C=CR_3'X$ (II)

EP 0 437 843 A1

wobei
$R_1'$
Wasserstoff oder eine Gruppe der Formel -COOM,
$R_2'$
Wasserstoff, Phenyl oder eine Gruppe der Formel -COOM,
$R_3'$
Wasserstoff, Methyl oder eine Gruppe der Formel -COOM oder $-CH_2COOM$,
X
eine Gruppe der Formel -COOM oder
$R_2'$ und $R_3'$
zusammen $C_4$-Alkylen oder
$R_1'$ und X
zusammen eine Gruppe der Formel

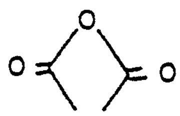

oder
$R_3'$ und X
zusammen eine Gruppe der Formel

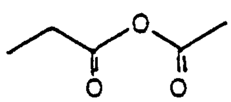

bedeuten.
Diese Copolymeren eignen sich als Komplexbildner, insbesondere in Waschmitteln, als Builder und Co-Builder, Peroxid-Stabilisatoren sowie als Granuliershilfsmittel für Bleichaktivatoren und in der Erdölförderung als Scale-Inhibitoren mit Korrosionsschutzwirkung.

# ALKENYLAMINOMETHYLENPHOSPHONSÄUREN UND DEREN COPOLYMERE MIT UNGESÄTTIGTEN CARBONSÄUREN

Niedermolekulare Polyelektrolyte, wie z.B. EDTA, Triphosphate aber auch Aminomethylenphosphonsäuren besitzen aufgrund ihres guten Calcium- und Schwermetallbindevermögens eine breite praktische Anwendung. So werden die Aminomethylenphosphonsäuren bevorzugt in der Bleichwäsche verwendet, da sie eine größere Schwermetallbindungskonstante besitzen als EDTA. Die vorhandenen Schwermetalle verringern in Waschmittelformulierungen die Lagerstabilität peroxidierter Verbindungen, was zu einer verringerten Bleichwirkung führt. Bei der Textil-Bleiche werden die Fasern durch Schwermetallkationen geschädigt.

Neben diesen niedermolekularen Polyelektrolyten erlangten hochmolekulare Polycarbonsäuren [M. Ragnetti; Tenside, Surfactants, Detergents 26, 30 (1989); W. Leonhardt, R. Peldszus, H. Wegert; Seifen, Öle, Fette, Wachse 113, 511 (1987)], wie Polyacrylsäure, Polyhydroxyacrylsäure [K. Henning, J. Kandler, H.D. Nielen; Seifen, Öle, Fette, Wachse 103, 571 (1977) und 104, 7 (1978)], Polymaleinsäure [DE-PS 24 05 284] oder Polyglyoxalsäure [US-Patent 4 140 676] in phosphatfreien bzw. phosphatreduzierten Waschmittelformulierungen eine große Bedeutung. Gegenüber den niedermolekularen Polyelektrolyten besitzen die hochmolekularen Polycarbonsäuren als sogenannte Co-Builder eindeutig bessere Eigenschaften. Die Wirkung der Polycarbonsäuren als Co-Builder beruht vermutlich auf einer besonders guten Transportfunktion von wasserlöslichen Metallionen, besonders von Calciumionen, aus der wäßrigen Waschmittellauge in die wasserunlöslichen Zeolithe. Die Co-Builder besitzen somit eine Ionenaustauscherfunktion, da sie einerseits Calcium binden und andererseits Calcium an die Zeolithe abgeben müssen. Diese Wirkung wurde von G. Manning [G.S. Manning in "Polyelectrolytes", Ed. E. Selegny, D. Riedel Publ. Comp. Dordrecht 1974 und G.S. Manning, J. Phys. Chem. 88, 6654 (1984)] mit seinem theoretischen Modell der Ionenkondensation beschrieben.

Die hochmolekularen Polycarbonsäuren werden desweiteren, neben niedermolekularen Polyelektrolyten, wie Aminomethylenphosphonsäuren, auf dem Gebiet der Stein- bzw. Scale-Inhibierung saliner Wässer, d.h. der Inhibierung der Ausfällung von wenig löslichen Salzen der Erdalkalimetalle, mit Korrosionsschutzwirkung eingesetzt. Die für die Steinverhinderung benötigten Mengen Polyelektrolyt sind unterstöchiometrisch und liegen im Bereich von 1 - 100 ppm. Man nimmt an, daß für diesen sogenannten "Treshold-Effekt" der Polyelektrolyt auf den Kristallitoberflächen absorbiert und so das Kristallwachstum stört bzw. ganz unterbindet. Die Scale-Inhibierung ist damit nicht nur auf dem Gebiet der Waschmittelformulierungen von großer Bedeutung, sondern auch bei der Erdölförderung. Ohne geeignete Maßnahmen zur Steinverhinderung würden saline Lagerstättenwasser die Poren zur Bohrsonde sowie die Förderröhre rasch verstopfen und eine effektive Erdölförderung verhindern. In der Praxis werden Polyacrylate bevorzugt zur Inhibierung von Erdalkalisulfat-, Aminomethylenphosphonsäuren bevorzugt zur Inhibierung von Erdalkalicarbonat-Ablagerungen eingesetzt.

Überraschenderweise wurde nun gefunden, daß man ungesättigte bekannte und neue Aminomethylenphosphonsäuren mit ungesättigten Carbonsäuren copolymerisieren kann und die erhaltenen Polymeren die bekannten Eigenschaften der unterschiedlichen Monomeren in einer einzigen Verbindung verknüpfen. Durch die Wahl der Monomeren, durch die mögliche Variation der Monomerenverhältnisse und durch die Variation des Molgewichtes der polymeren Produkte können somit Verbindungen ein und derselben Verbindungsklasse für völlig unterschiedliche Anwendungsziele maßgeschneidert werden.

Gegenstand der Erfindung sind neue Alkenylaminomethylenphosphonsäuren der Formel I

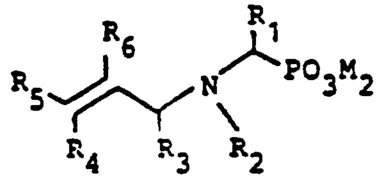

(I)

worin

$R_1$

Wasserstoff, $C_4$-$C_{10}$-Alkyl, Phenyl, Naphthyl, Methylphenyl, Hydroxyphenyl, Methoxyphenyl, Methylnaphthyl, Hydroxynaphthyl oder Methoxynaphthyl, bevorzugt Phenyl,

$R_2$

Wasserstoff,

$R_3$, $R_4$, $R_6$

Wasserstoff oder Methyl, bevorzugt Wasserstoff,

$R_5$

Wasserstoff, $C_1$-$C_4$-Alkyl oder Phenyl, bevorzugt Wasserstoff und

M

Wasserstoff oder ein Kation, vorzugsweise Natrium, Kalium oder Ammonium.

Die erfindungsgemäßen Alkenylaminomethylenphosphonsäuren werden hergestellt, indem man zunächst eine Verbindung der Formel

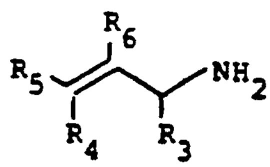

in einem organischen Lösungsmittel, z.B. einem niedrigen Alkohol mit 1 bis 5 C-Atomen, Chloroform oder Dimethylsulfoxid, mit einem Aldehyd der Formel $R_1CHO$ ($R_1$ hat die obengenannte Bedeutung), bei Temperaturen zwischen 0 und 100 °C, bevorzugt 10-50 °C 1 - 10 Stunden, bevorzugt 2 - 5 Stunden reagieren läßt und gegebenenfalls anschließend das organische Lösungsmittel mittels Destillation entfernt. Die so erhaltenen Verbindungen der Formel

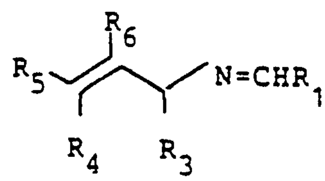

werden anschließend in einem Lösungsmittel bzw. Lösungsmittelgemisch, z.B. aus $C_1$-$C_4$-Carbonsäuren wie Essigsäure, deren Anhydriden oder anderen polaren Lösungsmitteln mit einem 1 - 50 %igen, bevorzugt 1 - 10 %igen molaren Überschuß an Phosphoriger Säure weiter umgesetzt. Die Isolierung der so erhaltenen Produkte der Formel I erfolgt zweckmäßigerweise durch Fällen mit Wasser oder niederen Alkoholen und nachfolgendes Waschen mit diesen Lösungsmitteln.

Gegenstand der Erfindung sind weiterhin neue Copolymere bestehend aus 0,1 - 99,9 Gew.-%, bevorzugt 1 - 50 Gew.-%, von einem oder mehreren Monomeren der Formel I, wobei $R_2$ Wasserstoff oder eine Gruppe der Formel $-CH_2PO_3M_2$ bedeutetund 99,9 - 0,1 Gew.-%, bevorzugt 99 - 50 Gew.-% von einem oder mehreren Monomeren der Formel

$R_1'R_2'C=CR_3'X$ (II)

wobei

$R_1'$

Wasserstoff oder eine Gruppe der Formel -COOM,

$R_2'$

Wasserstoff, Phenyl oder eine Gruppe der Formel -COOM,

$R_3'$

Wasserstoff, Methyl oder eine Gruppe der Formel -COOM oder $-CH_2COOM$,

X

eine Gruppe der Formel -COOM oder

$R_2'$ und $R_3'$

zusammen einen $C_4$-Alkylenrest oder

$R_1'$ und X

zusammen eine Gruppe der Formel

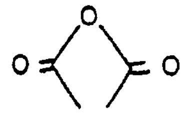

oder
$R_3$' und X
zusammen eine Gruppe der Formel

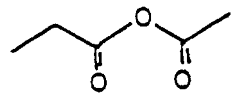

bedeuten. Die Copolymeren setzen sich hierbei aus 0,1 - 99,9, bevorzugt 1 - 50 Gew.-% eines oder mehrerer Monomere der Formel I und aus 99,9 - 0,1, bevorzugt 99 - 50 Gew.-% eines oder mehrerer Monomere der Formel II zusammen.

Die erfindungsgemäßen Copolymeren werden hergestellt, indem man Verbindungen der Formel I als Reinstoffe oder verunreinigt mit Neutralisationssalzen, beispielsweise Natriumsulfat oder Natriumchlorid, in Wasser oder in mit Wasser mischbaren organischen Lösungsmittel, vorzugsweise bei 20 - 100° C, bevorzugt 50 - 80° C vorlegt und nacheinander oder gleichzeitig mit Verbindungen der Formel II und einem Radikalstarter, beispielsweise Kaliumperoxodisulfat versetzt. Handelt es sich um wasserunlösliche Alkenylaminomethylenphosphonsäuren der Formel I, so werden sie vorher in wasserlösliche Salze, bevorzugt Alkali- und Ammoniumsalze, überführt. Die Polymerisation wird bei einer Gesamtmonomer-Konzentration von 5 - 60 Gew.-%, bevorzugt 10 - 30 Gew.-% 1 - 10 Stunden, vorzugsweise 2 - 5 Stunden, lang bei 70 - 100° C weiter fortgesetzt. Die farblos viskosen Polymerlösungen werden anschließend, je nach Verwendung, vorzugsweise mit Natronlauge auf einen gewünschten pH-Wert eingestellt und eventuell verdünnt und sprühgetrocknet.

Die so erhaltenen erfindungsgemäßen Copolymeren können allgemein als Erdalkali- und Schwermetall-Komplexbildner und in Waschmitteln als Builder und Co-Builder, Peroxidstabilisatoren sowie Granulierhilfsmittel für Bleichaktivatoren, beispielsweise für Tetraacetylethylendiamin und in der Erdölförderung als Scale-Inhibitoren mit Korrosionsschutzwirkung verwendet werden.

**Beispiele**

Die Prozentangaben sind in allen Beispielen als Gewichtsprozente zu verstehen. Die Eigenviskositätswerte K wurden nach Ubbelohde bestimmt.
Die $^{31}P$-NMR-Verschiebungswerte $\delta$ sind gegen Phosphorsäure als Standard gemessen worden.

In allen Beispielen wurde entionisiertes Wasser verwendet. Die Polymerisationen wurden in 1 l 5-Halskolben mit plangeschliffenem Deckel durchgeführt. Die Kolben sind ausgestattet mit Ankerrührer, Thermometer, Rückflußkühler, Gaseinleitungsrohr, Tropftrichter und beheizbarem Wasserbad. Die zur Polymerisation vorgelegten Lösungen werden mit Stickstoff gespült.

Die in den Beispielen angeführten Polymerlösungen können auch sprühgetrocknet oder zusammen mit anderen Substanzen, im besonderen Waschmittelinhaltsstoffen, versprüht werden. Die sauren Polymerlösungen (Beispiele 4, 6 und 8) werden in der Regel vorher auf einen pH-Wert zwischen 4 und 5 eingestellt. Zum Versprühen bzw. Aufsprühen eignen sich Konzentrationen mit ca. 10 % Polymer in der wäßrigen Lösung. Die wasserfreien Polymeren sind weiße, in Wasser resolibilisierbare Pulver.

**Beispiel 1**

**Herstellung von N-Allylamino(phenyl)methylenphosphonsäure**

Die Darstellung von N-Allylbenzylimin erfolgt analog der Literaturschrift von M. Bergmann, A. Miekeley, Chem. Ber. 57, 662 (1924). Als Lösungsmittel wird anstelle von Diethylether Isopropanol verwendet. Damit erhält man das in der Literatur beschriebene Produkt, Sdp. 96° C/12 Torr, in 95 %iger Ausbeute.

In einem 500 ml 4-Halskolben, ausgestattet mit Rührstab, Kontaktthermometer, Rückflußkühler und

Tropftrichter, werden 82 g (1 mol) Phosphorige Säure, 100 g Eisessig und 20 g Acetanhydrid bei 100° C vorgelegt und 72,5 g (0,5 mol) N-Allyl-benzylimin in ca. 20 Min. zugetropft. Anschließend rührt man den Ansatz 3 Stunden unter Rückfluß. Nach dem Abkühlen wird die Rohlösung in 200 ml Wasser eingerührt, wobei das Produkt ausfällt. Der Filterrückstand wird mehrmals gewaschen und 12 Stunden bei 80° C und 200 Torr Vakuum getrocknet. Man erhält 82 - 87 g (72 - 76 % Ausbeute) einer farblosen kristallinen Substanz mit einem Schmelzpunkt von 241 - 246° C.

$^{31}$P-NMR ($D_2O$/NaOD): $\delta$ = 16.3 ppm.

**Beispiel 2**

**Copolymer aus N-Allylamino(phenyl)methylendinatriumphosphonat und Natriumacrylat**

36 g Acrylsäure, 0,36 g N-Allylamino(phenyl)methylenphosphonsäure (Beispiel 1) und 125 g Wasser werden vorgelegt, mit 100 g 20 %iger Natronlauge neutralisiert und unter Einleiten eines schwachen Stickstoffstroms auf 80° C erhitzt. Bei dieser Temperatur wird die Katalysatorlösung, bestehend aus 0,9 g Kaliumperoxodisulfat und 20 g destilliertem Wasser, in 10 Minuten zugetropft. Nach der exothermen Phase wird noch 2 Stunden bei 80° C nachgeheizt. Man erhält eine farblose 17 %ige Polymerlösung mit einem Eigenviskositätswert K im Bereich von 40 - 45.

**Beispiel 3**

**Herstellung einer Natriumsulfatlösung von N-Allylamino-bis(methylenphosphonsäure)**

Allylamin, Formaldehyd und Phosphorige Säure werden im molaren Verhältnis 1:2:2 in einer Art Mannich-Reaktion, wie von K. Moedritzer und R.R. Irani, J. Org. Chem. 31(5), 1603-7 (1966) beschrieben, umgesetzt. Dabei wird Schwefelsäure anstelle von Salzsäure verwendet. Die N-Allylamino-bis-(methylenphosphonsäure) entsteht nahezu quantitativ.

$^{31}$P-NMR ($D_2O$): $\delta$ = 8.2 ppm.

Weil das wasserlösliche Produkt nur mit mäßiger Ausbeute zu isolieren ist, wird die Schwefelsäure quantitativ mit 33 %iger Natronlauge neutralisiert und die so erhaltene Natriumsulfat-Produktlösung direkt zur Copolymerisation verwendet (Beispiele 4 + 6 + 7).

Die üblicherweise in den Beispielen verwendete Lösung besteht aus 45 Gew.-% N-Allylamino-bis-(methylenphosphonsäure), 22,5 Gew.-% Natriumsulfat und 32,5 Gew.-% Wasser.

**Beispiel 4**

**Copolymer aus N-Allylamino-bis(methylenphosphonsäure) und Acrylsäure**

N-Allylamino-bis(methylenphosphonsäure) wird als Lösung eingesetzt, die, wie in Beispiel 3 beschrieben, zusammengesetzt ist. 22,2 g dieser Lösung werden zusammen mit 182 g Wasser vorgelegt. Unter Rühren und Einleiten eines schwachen Stickstoffstromes erhitzt man auf 80° C. In 3,5 Stunden werden synchron aus zwei Tropftrichtern 90 g Acrylsäure und 3 g Kaliumperoxodisulfat, gelöst in 53,4 g destilliertem Wasser, zugetropft. Nach erfolgter Zugabe wird 2 Stunden bei 80° C nachgerührt. Man erhält eine farblose, 28,5 %ige Polymerlösung mit Eigenviskositätswerten K zwischen 35 und 50 und 1,4 % Natriumsulfatgehalt.

**Beispiel 5**

**Terpolymer aus N-Allylamino-phenyl(methylen)dinatriumphosphonat, Natriumacrylat und Natriummaleinat**

6 g N-Allylamino(phenyl)methylenphosphonsäure, 36 g Acrylsäure, 15 g Maleinsäureanhydrid und 100

g Wasser werden vorgelegt. Mit 150 g 22 %iger Natronlauge wird eine neutrale Salzlösung (pH = 7.2) hergestellt und unter Einleiten eines schwachen Stickstoffstromes auf 80° C angeheizt. Bei dieser Temperatur wird die Katalysatorlösung, bestehend aus 1,8 g Ammoniumperoxodisulfat und 40 g Wasser, in 10 Min. zugetropft. Nach Abklingen der exothermen Reaktion rührt man bei 80° C 2 Stunden nach. Man erhält eine farblose 24,8 %ige Polymerlösung mit Eigenviskositätswerten K zwischen 30 und 40.

**Beispiel 6**

**Terpolymer aus N-Allylamino-bis(methylenphosphonsäure), Acrylsäure und Maleinsäureanhydrid**

13,3 g N-Allylamino-bis(methylenphosphonsäure)-Lösung (s. Beispiel 3) werden zusammen mit 15 g Maleinsäureanhydrid und 92,7 g Wasser vorgelegt und unter Rühren und Stickstoffspülung auf 80° C gebracht. Bei dieser Temperatur werden synchron 39 g Acrylsäure und 1,8 g Kaliumperoxodisulfat, gelöst in 40 g Wasser, innerhalb von 30 Minuten zugetropft. Danach rührt man 2 Stunden bei 80° C nach. Die 29,7 %ige Polymerlösung enthält 1,5 % Natriumsulfat, ist farblos und besitzt einen Eigenviskositätswert K zwischen 25 und 35. Bei Raumtemperatur kristallisiert das Polymer mit der Zeit aus.

**Beispiel 7**

**Terpolymer aus N-Allylamino-bis(methylendinatriumphosphonat), N-Allylamino(phenyl)-methylendinatriumphosphonat und Natriumacrylat**

3,6 g N-Allylamino-bis(methylenphosphonsäure)-Lösung (siehe Beispiel 3) werden zusammen mit 1,6 g N-Allylamino(phenyl)methylenphosphonsäure, 29,3 g Acrylsäure und 108 g Wasser vorgelegt und mit 70 g 20 %iger Natronlauge neutralisiert. Unter leichtem Stickstoffstrom erhitzt man die Vorlage auf 80° C und tropft 0,8 g Ammoniumperoxodisulfat, gelöst in 16 g Wasser, in 15 Minuten zu. Nach Abklingen der exothermen Reaktion wird weitere 4 Stunden bei 80° C gerührt. Die farblose 20 %ige Polymerlösung besitzt einen Eigenviskositätswert K zwischen 35 und 40.

**Beispiel 8**

**Copolymer aus isolierter N-Allylamino-bis(methylenphosphonsäure) und Acrylsäure**

Gewichtsverhältnisse und Verfahren wie Beispiel 4.

**Beispiele 9 - 10**

**Copolymere aus N-Allylamino(phenyl)methylendinatriumphosphonat und Natriumacrylat**

wie in Beispiel 2, aber mit 0,72 g (Beispiel 9) bzw. 1,08 g (Beispiel 10) N-Allylamino(phenyl)-methylenphosphonsäure.

**Beispiele 11 und 12**

**Copolymere aus N-Allylamino-bis(methylenphosphonsäure) und Methacrylsäure**

nach dem Verfahren wie in Beispiel 4 beschrieben, mit 10 Gew.-% (Beispiel 11) bzw. 1 Gew.-% (Beispiel 12) Phosphonsäure im Copolymer.

**Anwendungsbeispiele**

**1. Calciumbindevermögen und Dispergierung von Calciumcarbonat**

Testsubstanzen:

- Beispiele 4 und 8 (mit NaOH-Lösung auf pH 5 eingestellt und 10 %ige Lösung sprühgetrocknet)
- Polyacrylsäure-Na-Salz (MG 130.000)

Die Versuchsergebnisse mit der Ca-empfindlichen Elektrode (Puffer: 0,03 n $NH_4Cl$ + 0,07 n $NH_3$) sind in der Abbildung dargestellt. Die beiden Copolymeren aus den Beispielen 4 und 8 binden Calciumionen im

Vergleich zu einem reinen Natriumpolyacrylat etwas besser.

Die Dispergierung von Calciumcarbonat wurde nach der Filtriermethode unter folgenden Testbedingungen bestimmt:
4 mmol Calciumionen, 44 mmol Natriumcarbonat, 2 mmol Natriumhydroxid, 250 ppm Polymer, T = 40°C

| Produkt | Anteil $CaCO_3$ dispergiert [%] |
|---|---|
| Beispiel 4 (MG 170.000) | 69 |
| Beispiel 8 (MG 170.000) | 59 |
| Polyacrylsäure-Na-Salz (MG = 130.000) | 55 |

Auch bezüglich des Dispergiervermögens schneiden die Copolymeren 4 und 8 besser ab als das zum Vergleich gemessene Polyacrylsäure-Natriumsalz.

Durch die Verwendung von roher nach Beispiel 3 erhaltener copolymerisierter Phosphonsäure sinkt die Qualität gegenüber dem Einsatz isolierter Reinphosphonsäure (Beispiel 8) nicht ab.

**2. Builder-Wirkung**

Testsubstanzen:

- Beispiele 4, 8, 11 und 12 (mit NaOH-Lösung auf pH 5 eingestellt und 10 %ige Lösung sprühgetrocknet)
- (R)Sokalan CP 5 (BASF)

Die Waschversuche wurden in einem Launder-o-meter bei 40°C und einer Waschzeit von 30 Minuten durchgeführt. Als Tensid wurden 0,5 g/l Alkylbenzolsulfonat (Marlon A 350, Hüls) eingesetzt, die Wasserhärte betrug 23°dH. Der pH-Wert der Waschlauge wurde mit verdünnter Natronlauge auf pH 10 eingestellt. Als Testanschmutzung wurden jeweils 4 Streifen einer Standard-Anschmutzung (WFK-Baumwolle, 10C) eingesetzt. Als Builder wurden die obengenannten erfindungsgemäßen Copolymerisate und als Vergleichssubstanz (R)Sokalan CP5 (Copolymer aus Acrylsäure und Maleinsäureanhydrid (70/30), BASF) eingesetzt. Die Builderkonzentrationen betrugen 0; 0,25; 0,5; 0,75; 1; 1,5 und 2 g/l. Die Differenz zu 2 g/l wurde jeweils durch Natriumsulfat ergänzt.

Die Builderwirkung wurde durch Remissionszunahme an den Testgeweben ermittelt. Die Auswertung erfolgte in bekannter Weise.

Remissionswerte

| | Builderkonzentrationen [g/l] | | | | | | |
|---|---|---|---|---|---|---|---|
| Builder | 0 | 0,25 | 0,5 | 0,75 | 1,0 | 1,5 | 2,0 |
| Bsp. 4 | 42,7 | 42,9 | 43,5 | 44,8 | 44,9 | 49,1 | 50,5 |
| Bsp. 8 | 42,4 | 42,6 | 42,7 | 43,8 | 44,3 | 47,7 | 50,2 |
| Bsp. 11 | 42,5 | 42,9 | 43,8 | 43,9 | 44,4 | 45,4 | 48,2 |
| Bsp. 12 | 42,5 | 42,8 | 43,0 | 43,9 | 44,5 | 45,0 | 48,4 |
| CP5 | 42,7 | 42,7 | 42,8 | 42,9 | 44,4 | 47,5 | 49,3 |

Die Produkte aus den Beispielen 4 und 8 sind als Builder wirkungsvoller als die Vergleichssubstanz (R)Sokalan CP5 (BASF).

**3. Co-Builder-Wirkung**

Testsubstanzen:

- Beispiel 4, 8 (mit NaOH-Lösung auf pH 5 eingestellt und 10 %ige Lösung sprühgetrocknet)

Die Waschversuche wurden in einem Launder-o-meter bei 40 °C und einer Waschzeit von 30 Minuten durchgeführt. Als Tensid wurden 0,5 g/l Alkylbenzolsulfonat (Marlon A 350, Hüls), als Buildersystem 1,5 g/l Zeolith A eingesetzt. Die Wasserhärte betrug 23 °dH. Der pH-Wert der Waschlauge wurde mit verdünnter Natronlauge auf pH 10 eingestellt. Als Testanschmutzung wurden jeweils 4 Streifen einer Standard-Anschmutzung (WFK-Baumwolle, 10C) eingesetzt. Als Co-builder wurden die oben genannten erfindungsgemäßen Copolymerisate eingesetzt.

Die Builderkonzentrationen betrugen 0; 0,25; 0,5; 0,75; 1; 1,5 und 2 g/l. Die Differenz zu 2 g/l wurde jeweils durch Natriumsulfat ergänzt.

Die Co-Builder-Wirkung wurde durch Remissionszunahme an den Testgeweben ermittelt. Die Auswertung erfolgte in bekannter Weise.

Remissionswerte

| | Builderkonzentrationen [g/l] | | | | | | |
|---|---|---|---|---|---|---|---|
| Builder | 0 | 0,25 | 0,5 | 0,75 | 1,0 | 1,5 | 2,0 |
| Bsp. 4 | 44,4 | 45,1 | 46,2 | 47,4 | 48,3 | 49,5 | 49,9 |
| Bsp. 8 | 44,4 | 45,1 | 46,3 | 48,3 | 49,1 | 50,6 | 52,2 |

Vergleichbare Ergebnisse wurden erzielt, wenn anstelle des Zeoliths ein Schichtsilikat vom Typ SKS6 (Hoechst) eingesetzt wurde.

**4. Peroxid-stabilisierende Wirkung (Schnelltest)**

Testsubstanzen:

- Beispiel 4 (mit NaOH-Lösung auf pH 5 eingestellt und 10 %ige Lösung sprühgetrocknet)

Zur Untersuchung der Peroxid-stabilisierenden Wirkung der erfindungsgemäßen Copolymeren wurde in wäßrigen alkalischen Wasserstoffperoxidlösungen, die Metallionen enthielten, der zeitliche Abfall der Wasserstoffperoxid-Konzentration in Gegenwart eines Komplexbildners untersucht.

Zu diesem Zweck wurden in einem Becherglas 1 l destilliertes Wasser vorgelegt, 20 ml einer 0,1 %igen Kupfersulfat-Lösung und 6 g Natriumhydroxid zugegeben. Nach Zugabe des Komplexbildners wurde die Lösung auf 70 °C temperiert, dann 30 g einer 30 %igen Wasserstoffperoxid-Lösung zugegeben und die Zeit gestartet. Der Waserstoffperoxid-Gehalt der Lösung wurde in Abständen von 2 Minuten jodometrisch durch Titration mit Natriumthiosulfat-Lösung bestimmt. Nach 10 Minuten wurden folgende Restmengen an Wasserstoffperoxid bestimmt:

| Komplexbildner | Restmenge $H_2O_2$ |
|---|---|
| ohne | 0 % |
| 1 g Copolymer Bsp. 8 | 45 % |

Das erfindungsgemäße Copolymer ist ein Peroxid-Stabilisator.

**5. Wirkung als Scale-Inhibitor**

Testsubstanzen:

- Beispiele 2, 9, 10
- (R)Dodiscale 2849 (Polyacrylsäure-Ammoniumsalz)
- (R)Dodiscale 2870 (Phosphonsäure-Ammoniumsalz)

Als Prüfverfahren wurde der NACE-Standard-Test TM 0374-79 angewendet. Diese einfache statische

Testmethode wurde speziell für die Anwendung von Scaleinhibitoren in Erdölfeldern als Screeningmethode entwickelt.

Durchführung:

Es wurden folgende Lösungen benutzt: $CaCO_3$-Fällungstest
$Ca^{2+}$-Lsg.:
12,15 g/l $CaCl_2$ x 2 $H_2O$;
3,68 g/l $MgCl_2$ x 6 $H_2O$: 33 g NaCl
$HCO_3^-$-Lsg.:
7,36 g/l $NaHCO_3$; 0,0294 g/l $Na_2SO_4$;
33 g NaCl $CO_2$ gesättigt.

$CaSO_4$- Fällungstest
$Ca^{2+}$-Lsg.: 7,5 g/l NaCl; 11,1g/l $CaCl_2$ x 2 $H_2O$
$SO_4^{2-}$-Lsg.: 7,5 g/l NaCl; 10,66 g/l $Na_2SO_4$

Ansetzen der Proben $CaCO_3$-Test

Inhibitor in 1 % Lösung zu 50 ml $HCO_3^-$-Lsg. mischen, dann 50 ml $Ca^{2+}$-Lsg. zugeben und nochmals mischen.

Ansetzen der Proben $CaSO_4$-Test

Inhibitor in 1 % Lösung zu 50 ml $SO_4^{2-}$ Lsg. mischen, dann 50 ml $Ca^{2+}$-Lsg. zugeben und nochmals mischen.

Die mit $CaCO_3$ bzw. $CaSO_4$ übersättigten Lösungen wurden 24 Stunden bei 70° C im Trockenschrank in verschlossenen 100 ml-Flaschen (DIN 250 DAB) gelagert. Anschließend erfolgte die komplexometrische Bestimmung des in Lösung gebliebenen $Ca^{++}$ mit 0,01 Mol/l Idranal III und Indikator Puffertabletten.

Einsatzkonzentrationen WS: 1 3 10 30 ppm Formel zur Bestimmung des Dispergier-Effektes I (%)

$$I = \frac{C_a - C_b}{C_c - C_b} \times 100$$

$C_a$ = $Ca^{2+}$ Konzentration in Anwesenheit des Inhibitors
$C_b$ = $Ca^{2+}$ Konzentration in Abwesenheit des Inhibitors
$C_c$ = $Ca^{2+}$ Konzentration gesamt

Bei üblichem Verfahren wurde nach der Entnahme von 1 ml der Pufferlösung mit 0,01 Mol/l Idranal III folgender Verbrauch ermittelt:

| | $CaCO_3$ | $CaSO_4$ |
|---|---|---|
| $C_c$ (theoretisch) | 5,04 ml | 3,80 ml |
| $C_b$ (experimentell) | 3,3 - 3,5 ml | 2,6 - 2,8 ml |
| $C_a$ (variabel) | 3,3 - 5,0 ml | 3,0 - 3,8 ml |

Als Vergleichsprodukte wurden (R)Dodiscale 2849 und (R)Dodiscale 2870 (Hoechst) getestet.

Dispergier-Effekt I [%] bei Calciumcarbonat

| | Konzentrationen des Inhibitors [ppm] | | | |
|---|---|---|---|---|
| Scale-Inhibitor | 1 | 3 | 10 | 30 |
| Bsp. 2 | 26 | 41 | 61 | 90 |
| Bsp. 9 | 17 | 30 | 63 | 91 |
| Bsp. 10 | 24 | 35 | 46 | 91 |
| (R)Dodiscale 2849 | 43 | 62 | 67 | 80 |
| (R)Dodiscale 2870 | 44 | 63 | 72 | 88 |

Dispergier-Effekte I [%] bei Calciumsulfat

| | Konzentrationen des Inhibitors [ppm] | | |
|---|---|---|---|
| Scale-Inhibitor | 1 | 3 | 10 |
| Bsp. 2 | 95 | 99 | 99 |
| Bsp. 9 | 93 | 98 | 99 |
| Bsp. 10 | 90 | 98 | 98 |
| (R)Dodiscale 2849 | 88 | 98 | 99 |
| (R)Dodiscale 2870 | 80 | 95 | 98 |

Die Copolymeren 2, 9 und 10 sind z.T. effektivere Scale-Inhibitoren als die Natriumsalze der reinen Polyacrylsäuren bzw. die Natriumsalze der reinen Phosphonsäuren.

**Patentansprüche**

1. Alkenylaminomethylenphosphonsäuren der Formel

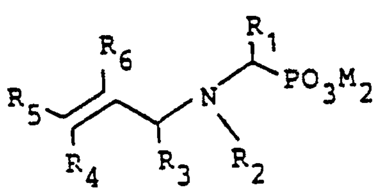

(I)

worin

$R_1$

Wasserstoff, $C_4$-$C_{10}$-Alkyl, Phenyl, Naphthyl, Methylphenyl, Hydroxyphenyl, Methoxyphenyl, Methylnaphthyl, Hydroxynaphthyl oder Methoxynaphthyl, bevorzugt Phenyl,

$R_2$

Wasserstoff,

$R_3$, $R_4$, $R_6$

Wasserstoff oder Methyl, bevorzugt Wasserstoff,

$R_5$

Wasserstoff, $C_1$-$C_4$-Alkyl oder Phenyl, bevorzugt Wasserstoff und

M

Wasserstoff oder ein Kation, vorzugsweise Natrium, Kalium und Ammonium.

2. Verfahren zur Herstellung der Alkenylaminomethylenphosphonsäuren nach Anspruch 1, dadurch gekennzeichnet, daß man zunächst eine Verbindung der Formel

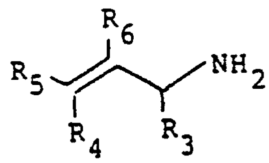

mit einem Aldehyd der Formel $R_1$-CHO umsetzt und anschließend die so erhaltenen Produkte der Formel

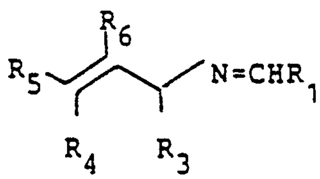

mit einem Überschuß an Phosphoriger Säure weiter zu wasserunlöslichen Produkten der Formel I umsetzt.

3. Copolymere bestehend aus 0,1 - 99,9 Gew.-%, bevorzugt 1 - 50 Gew.-%, von einem oder mehreren Monomeren der Formel I, wobei $R_2$ Wasserstoff oder eine Gruppe der Formel $-CH_2PO_3M_2$ bedeutet und 99,9 - 0,1 Gew.-%, bevorzugt 99 - 50 Gew.-% von einem oder mehreren Monomeren der Formel

$R'_1R_2'C = CR'_3X$ (II)

wobei
$R_1$'
Wasserstoff oder eine Gruppe der Formel -COOM,
$R_2$'
Wasserstoff, Phenyl oder eine Gruppe der Formel -COOM,
$R_3$'
Wasserstoff, Methyl oder eine Gruppe der Formel -COOM oder $-CH_2COOM$,
X
eine Gruppe der Formel -COOM oder
$R_2$' und $R_3$'
zusammen einen $C_4$-Alkylrest oder
$R_1$' und X
zusammen eine Gruppe der Formel

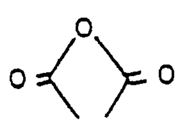

oder
$R_3$' und X
zusammen eine Gruppe der Formel

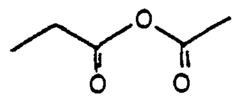

bedeuten.

4. Verfahren zur Herstellung der Copolymeren nach Anspruch 3, dadurch gekennzeichnet, daß man Verbindungen der Formel I mit Verbindungen der Formel II polymerisiert.

5. Verfahren nach Anspruch 4, dadurch gekennzeichnet, daß die Polymerisation in Anwesenheit von Natriumsulfat durchgeführt wird.

6. Verwendung der Polymeren nach Anspruch 3 als Erdalkali- und Schwermetall-Komplexbildner und in Waschmitteln als Builder und Co-Builder, Peroxidstabilisatoren sowie Granulierhilfsmittel für Bleichaktivatoren, beispielsweise für Tetraacetylethylendiamin und in der Erdölförderung als Scale-Inhibitoren mit Korrosionsschutzwirkung.

**Patentansprüche für folgenden Vertragsstaat: ES**

1. Verfahren zur Herstellung von Alkenylaminomethylenphosphonsäuren der Formel

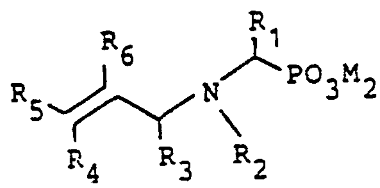

(I)

worin
$R_1$
Wasserstoff, $C_4$-$C_{10}$-Alkyl, Phenyl, Naphthyl, Methylphenyl, Hydroxyphenyl, Methoxyphenyl, Methylnaphthyl, Hydroxynaphthyl oder Methoxynaphthyl, bevorzugt Phenyl,
$R_2$
Wasserstoff,
$R_3$, $R_4$, $R_6$
Wasserstoff oder Methyl, bevorzugt Wasserstoff,
$R_5$
Wasserstoff, $C_1$-$C_4$-Alkyl oder Phenyl, bevorzugt Wasserstoff und
M
Wasserstoff oder ein Kation, vorzugsweise Natrium, Kalium und Ammonium,
dadurch gekennzeichnet, daß man zunächst eine Verbindung der Formel

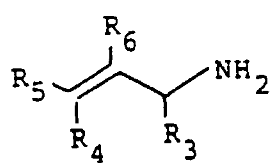

mit einem Aldehyd der Formel $R_1$-CHO umsetzt und anschließend die so erhaltenen Produkte der Formel

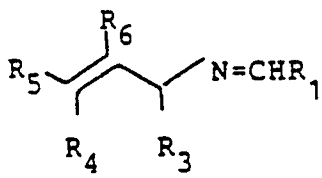

mit einem Überschuß an Phosphoriger Säure weiter zu wasserunlöslichen Produkten der Formel I umsetzt.

2. Verfahren zur Herstellung von Copolymeren bestehend aus 0,1 - 99,9 Gew.-%, bevorzugt 1 - 50 Gew.-%, von einem oder mehreren Monomeren der Formel I, wobei $R_2$ Wasserstoff oder eine Gruppe der Formel $-CH_2PO_3M_2$ bedeutet und 99,9 - 0,1 Gew.-%, bevorzugt 99 - 50 Gew.-% von einem oder mehreren Monomeren der Formel

$R'_1R_2'C = CR'_3X$ (II)

wobei
$R_1'$
Wasserstoff oder eine Gruppe der Formel -COOM,
$R_2'$
Wasserstoff, Phenyl oder eine Gruppe der Formel -COOM,
$R_3'$
Wasserstoff, Methyl oder eine Gruppe der Formel -COOM oder $-CH_2COOM$,
X
eine Gruppe der Formel -COOM oder
$R_2'$ und $R_3'$
zusammen einen $C_4$-Alkylrest oder
$R_1'$ und X
zusammen eine Gruppe der Formel

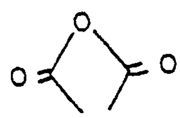

oder
$R_3'$ und X
zusammen eine Gruppe der Formel

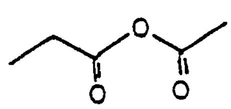

bedeuten,
dadurch gekennzeichnet, daß man Verbindungen der Formel I mit Verbindungen der Formel II polymerisiert.

3. Verfahren nach Anspruch 2, dadurch gekennzeichnet, daß die Polymerisation in Anwesenheit von Natriumsulfat durchgeführt wird.

4. Verwendung der nach Anspruch 2 hergestellten Polymeren als Erdalkali- und Schwermetall-Komplexbildner und in Waschmitteln als Builder und Co-Builder, Peroxidstabilisatoren sowie Granulierhilfsmittel für Bleichaktivatoren, beispielsweise für Tetraacetylethylendiamin, und in der Erdölförderung als Scale-Inhibitoren mit Korrosionsschutzwirkung.

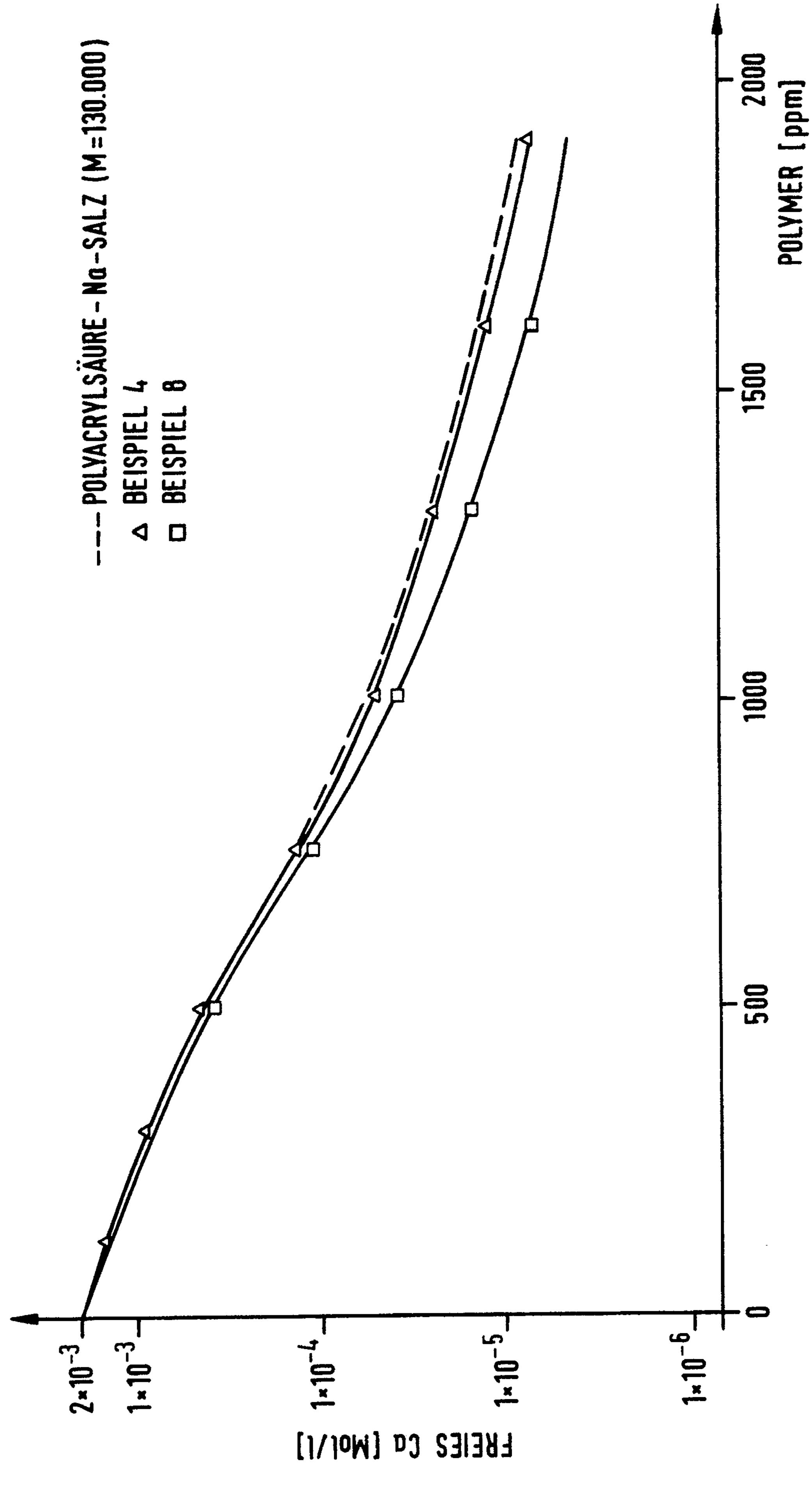
--- POLYACRYLSÄURE - Na - SALZ (M=130.000)
△ BEISPIEL 4
□ BEISPIEL 8
FREIES Ca [Mol/l]
2×10⁻³
1×10⁻³
1×10⁻⁴
1×10⁻⁵
1×10⁻⁶
POLYMER [ppm]
0
500
1000
1500
2000

Europäisches Patentamt

# EUROPÄISCHER RECHERCHENBERICHT

Nummer der Anmeldung

EP 90125636.2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 5) |
|---|---|---|---|
| X | CHEMICAL ABSTRACTS, Band 85, Nr. 25, 20.Dezember 1976, Columbus, Ohio, USA<br>J. ZON, P. MASTALERZ "Aminophosphonic acids derived from salicylaldehyde" Seite 566, Spalte 1, Zusammenfassung-Nr. 192 829b<br>& Rocz. Chem. 76 Band 50 (7-8 Seiten 1403-10.<br>-- | 1 | C 07 F 9/38<br>C 08 F 230/02<br>C 08 F 246/00<br>C 08 F 220/10<br>C 11 D 3/34<br>C 11 D 3/36<br>E 21 B 41/02 |
| A | EP - A1 - 0 210 952<br>(CIBA-GEIGY)<br>* Anspruch 1; Beispiele 3,4 *<br>-- | 1,6 | |
| A | EP - B1 - 0 037 146<br>(UNILEVER)<br>* Anspruch 1 *<br>-- | 1,6 | |
| D,A | US - A - 4 140 676<br>(CRUTCHFIELD et al.)<br>* Zusammenfassung *<br>-- | 3,6 | RECHERCHIERTE SACHGEBIETE (Int Cl 5) |
| D,A | DE - C2 - 2 405 284<br>(CIBA-GEIGY)<br>* Spalte 2, vorl. Absatz *<br>---- | 3,6 | C 07 F<br>C 08 F<br>C 11 D<br>E 21 B |

Der vorliegende Recherchenbericht wurde für alle Patentansprüche erstellt.

| Recherchenort | Abschlußdatum der Recherche | Prüfer |
|---|---|---|
| WIEN | 09-04-1991 | MARCHART |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82